# EUROPEAN PATENT APPLICATION

(11) **EP 4 656 315 A1**
(43) Date of publication of application: **03.12.2025**
(21) Application number: 23918179.5
(22) Date of filing: 10.11.2023
(51) Int. Cl.: B23B 51/00

(54) **ASYMMETRIC STEPWISE-CUTTING STEP DRILL BIT**

(30) Priority: 28.01.2023 CN 202320184859 U
(71) Applicant: Jiang, Xiaomeng, Hangzhou, Zhejiang 310000 (CN)
(72) Inventor: Jiang, Xiaomeng, Hangzhou, Zhejiang 310000 (CN)
(74) Representative: Ezcurra Zufia, Maria Antonia
(86) International application number: PCT/CN2023/116491
(87) International publication number: WO 2024/156178

(57) **Abstract**

An asymmetric stepwise-cutting step drill bit, comprising a shank (1) and a working part (2). The front end of the working part is provided with a first cutting part (3) and a second cutting part (4); the first cutting part (3) comprises a first set of cutting vertical edges (301) and a first set of cutting chisel edges (302); the first set of cutting vertical edges (301) are connected to a first set of vertical edge relief surfaces (3011); the first set of cutting chisel edges (302) are connected to a first set of chisel edge relief surfaces (3021); the second cutting part (4) comprises a second set of cutting vertical edges (401) and a second set of cutting chisel edges (402); the second set of cutting vertical edges (401) are connected to a second set of vertical edge relief surfaces (4011); the second set of cutting chisel edges (402) are connected to a second set of chisel edge relief surfaces (4021). A drill bit head is regarded as two independent parts to be separately machined, so as to implement stepwise cutting to the greatest extent; in addition, respectively setting cutting angles of the two cutting edges may realize different combinations of cutting effects, so as to achieve the optimal combination of cutting speed, cutting durability, degree of cutting finish and cutting precision under different cutting conditions, thus making the machining more energy-efficient.

## Description

### Technical field

The utility model relates to the field of machining.

### Background technology

Step pointed cutting head drill is based on the standard twist drill head, sharpen the center point into step by step cutting. The existing one was symmetrically built for two cutting sections, which is improved now by the above claims to have better performance.

The drill bit designed in this application makes the cutting head into more cutting steps by two independent asymmetric structure. Thanks for two cutting sections independently built. The optimized performance can be achieved by different combination of steps and cutting clearance angles

Application no. CN201620119858.4 discloses a step pointed drill, including a drill body, the working part, the cutting part, and two cutting sections with steps cutting point, where the two cutting sections are symmetric without the possibility to optimize the cutting performance.

### Utility model content

The utility model provides an asymmetric step cutting point which is different than the prior art.

In order to improve the drilling performance, the utility model is built to give the solutions below:
An asymmetric step by step drill including a handle and a working part, the first cutting section and a second cutting section.

The two cutting sections are built up separately with different steps
and cutting clearance angles.

As preferably, the number of cutting edges of the first cutting section is more than the second cutting section, and both cutting edges are arranged in an axially staggered position.

As preferably, the step spacing formed by the first cutting section is not equal to the step spacing formed by the second cutting section.

As preferably, the cutting clearance angles of the first cutting section is different than the second cutting section.

The utility model using the above technical scheme, has a significant technical effect: the drill head is as two independent parts, respectively, the first and second cutting, the first and second cutting for asymmetric structure, the first cutting angle is different from the second, to realize the optimize cutting performance, cutting efficiency and cutting life, at the same time because of the cutting reduced cutting force, the power required can be reduced, especially when using battery drill, it will work longer.

### Attached figure description

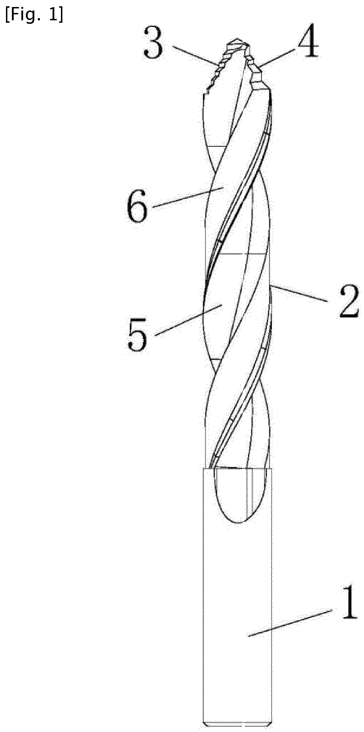

FIG. 1 is a schematic diagram of the structure of the present utility model.

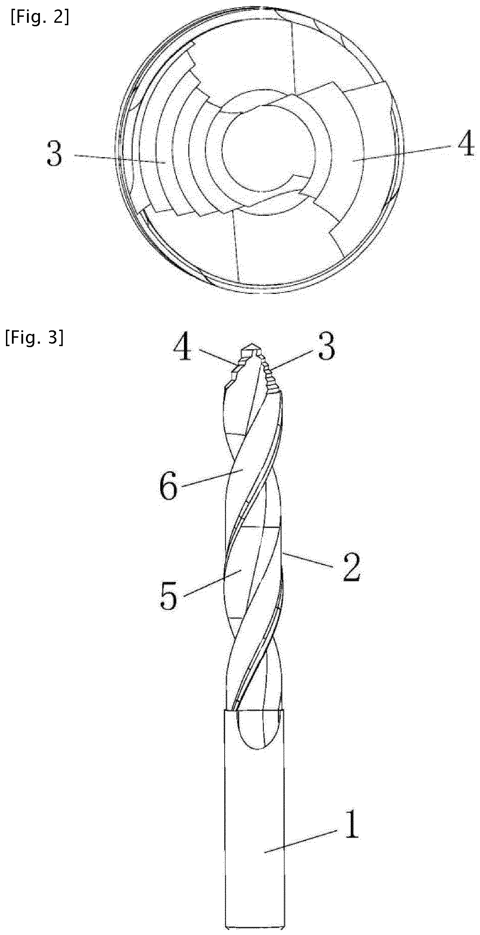

Figure 2 is a top view of Figure 1.
Figure 3 is the posterior view of Figure 1.

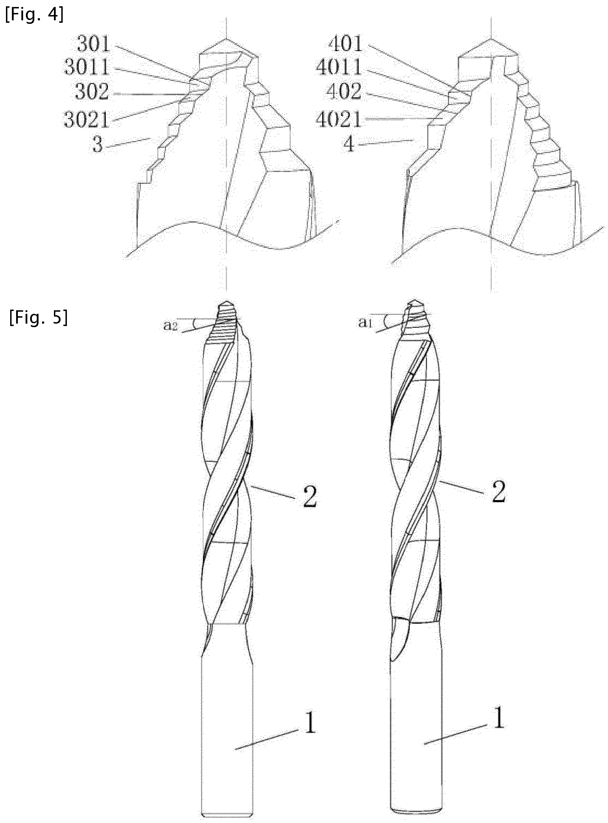

FIG. 4 is a schematic diagram of the first cutting part and the second cutting part.
FIG. 5 is a schematic diagram of the rear corners of the first cutting part and the second cutting part.

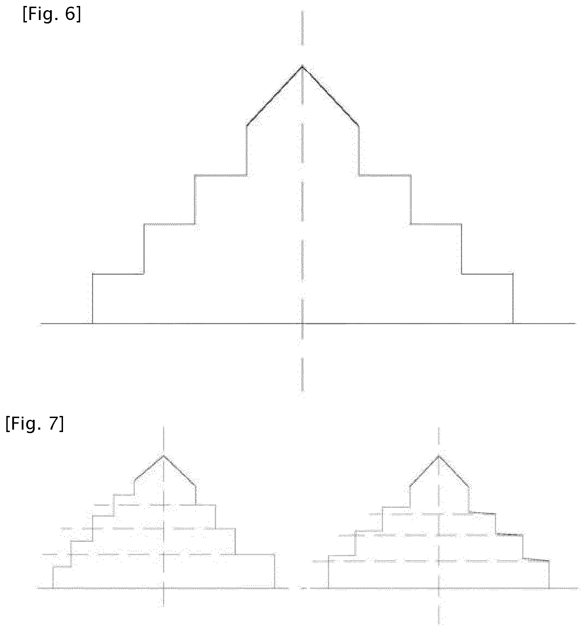

FIG. 6 is a schematic diagram of a symmetrical cutting step drill in the prior art.
FIG. 7 is a schematic diagram of an asymmetric step drill in this application.

The names of the parts indicated by the numbers in the attached drawings are as follows: 1- -handle, 2- -working section, 3- -first cutting edge, 3011- -the first set of cutting edge, 302- -first group of cutting edge, 3021- -the first set of cutting edge, 4- -second cutting edge, 401- -second cutting edge, 4011,402- -second cutting edge, 4021, the second set of rear cutting edge, 5- -spiral groove, 6- -blade back.

### Specific implementation methods

The utility model is further described in detail below in combination with the drawings and embodiments.

### Example 1

The number of cutting edges of the first cutting section 3 is more than the second cutting section 4, and both cutting edges are arranged in an axial staggered position.

The cutting clearance angles of 4 can be bigger than cutting clearance angles of 3. With less steps than 3, the cutting section 4 will be a fast
corse cutting section.

The cutting clearance angles of 3 is smaller than cutting clearance angles of 4. With more steps than 3, the cutting section 3 will be a fine finish cutting section.

Working principle: the drill head is the working part 2 as two independent parts, processing, the first cutting part 3 and the second cutting unit 4, the first cutting part 3 and the second cutting part 4 as asymmetric structure, the cutting angle of the first cutting part 3 from the second cutting part 4, to achieve the optimal of the two cutting performance and finish.

Meanwhile cutting efficiency and tools life are improved because more cutting steps reduce the cutting force.

Less power is required for same drilling, which improve the energy efficiency.

## Claims

1. An asymmetric step by step drill, Including the shank (1) and the work part (2), the shank (1) is connected to work part (2).
The key point is, working part (2) have the first cutting group (3) and the second cutting group (4) which are asymmetric built up.
The first cutting section (3) includes the first vertical cutting edge (301) and the first cross cutting edges (302), The vertical cutting edges (301) is connected with the clearance angle (3011), the cross cutting edges (302) is connected with clearance angle (3021)
The second cutting section (4) includes the second vertical cutting edges (401) and the second cross cutting edges (402), The second vertical cutting edge (401) is connected with the clearance angle (4011), The second cross cutting edges (402) is connected with the clearance angle (4021);
The first cutting section (3) is and the second cutting part (4) are in an axially staggered position; The step spacing formed by the first cutting part (3) is not equal to the step spacing formed by the second cutting part (4). And step numbers of cutting section (3) can be different than cutting section (4).

2. The cutting steps of both cutting sections can be vario-height arranged, from 0.5-6mm, depends on the cutting performance and finish required.

3. Wherein the cutting clearance angle formed by the first set of cutting edges (301) and the first set of rear cutting edges (3011) may has different angle from the second set of cutting edges (401) and the second set of clearance cutting surfaces (4011).

4. Wherein the cutting clearance angle formed by the first set of cutting edges (302) and the first set of clearance cutting edges (3021) may have different angle from the second set of cutting blades (402) and the second set of rear cutting edges (4021).

5. The asymmetric stepwise cutting stepped drill according to claim 1, wherein a cutting clearance angle formed by a first set of cutting chisel edges (302) and a first set of chisel edge relief angle surfaces (3021) is the same as or different from a cutting clearance angle formed by a second set of cutting chisel edges (402) and a second set of chisel edge relief angle surfaces (4021).

6. The asymmetric stepwise cutting stepped drill according to claim 1, wherein an operation portion (2) is further provided with a spiral groove (5) and a margin land (6).
